# EUROPEAN PATENT SPECIFICATION

(11) **EP 3 703 302 B1**
(45) Date of publication and mention of the grant of the patent: **27.07.2022**
(21) Application number: 19382155.0
(22) Date of filing: 01.03.2019
(51) Int. Cl.: H04L 5/14, H04L 5/00

(54) **METHOD AND DEVICE FOR MINIMIZING INTERFERENCES BETWEEN TDD COMMUNICATIONS NETWORKS**
VERFAHREN UND VORRICHTUNG ZUR MINIMIERUNG VON INTERFERENZEN ZWISCHEN TDD-KOMMUNIKATIONSNETZWERKEN
PROCÉDÉ ET DISPOSITIF PERMETTANT DE MINIMISER LES INTERFÉRENCES ENTRE DES RÉSEAUX DE COMMUNICATION TDD

(43) Date of publication of application: 02.09.2020
(73) Proprietor: Telefonica, S.A., 28013 Madrid (ES)
(72) Inventor: LORCA HERNANDO, Javier, 28013 MADRID (ES); SERNA SANTIAGO, Elena, 28013 MADRID (ES)
(74) Representative: Herrero & Asociados, S.L.

(56) References cited:
- ZTE: "Channel sensing based schemes for cross-link interference mitigation in NR", 3GPP DRAFT; R1-1712282 - 6.1.5.2 CHANNEL SENSING BASED SCHEMES FOR CLI MITIGATION, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Prague, Czech Republic; 20170821 - 20170825 20 August 2017 (2017-08-20), XP051315098, Retrieved from the Internet: URL:http://www.3gpp.org/ftp/Meetings_3GPP_ SYNC/RAN1/Docs/ [retrieved on 2017-08-20]
- CATT: "Discussion on eNB synchronization error", 3GPP DRAFT; R4-132644, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Fukuoka, Japan; 20130520 - 20130524 13 May 2013 (2013-05-13), XP050702755, Retrieved from the Internet: URL:http://www.3gpp.org/ftp/tsg_ran/WG4_Ra dio/TSGR4_67/Docs/ [retrieved on 2013-05-13]

## Description

### Field of the invention

The present invention has its application within the telecommunication sector, particularly in cellular (wireless) communications networks. More specifically, the present invention proposes a method and device to minimize inter-system and intra-system interferences in order to allow coexistence between cellular networks (cellular systems) using Time Division Duplex (TDD) technology and, therefore, in Time Division Duplex (TDD) bands.

### Background of the invention

TDD bands (frequency bands assigned to be used by TDD systems) are attractive for Fifth-Generation (5G) systems, as they have the potential to offer large bandwidths for future cellular use. Particularly, the electromagnetic spectrum above 6 GHz (generally referred to as millimetre-waves) is usually offered in contiguous mode for simplicity of the UE frontends in cellular networks, hence enforcing TDD operation. The millimetre-wave (mmWave) frequency region comprises radio frequencies in the range from 30 GHz to 300 GHz although in some practical applications, frequencies above 6 GHz are also regarded as mmWaves. The availability of large bandwidths, together with the potential to allocate cellular services, makes these frequencies very well suited for Fixed Wireless Access (FWA) applications, but mobility services can also be offered.

Time Division Duplex mode is attractive because it can cope with asymmetric traffic demands, as opposed to Frequency Division Duplex (FDD) mode where capacity for uplink (UL) and downlink (DL) is symmetric. In FDD, different frequencies are used in UL and DL. In TDD technology, usually the same carrier frequency is used for both uplink (from the user equipment to the base station) and downlink (from the base station to the user equipment) transmissions; the carrier is subdivided in the time domain into a series of timeslots and the single carrier is assigned to uplink during some timeslots and to downlink during other timeslots.

One of the drawbacks of TDD bands is, however, the potential coexistence issues that appear between systems operating in the same band, because interference from BS to BS and from UE to UE can be very strong unless special protection mechanisms are devised. The presence of multiple cross interferences in TDD systems makes it essential to follow strict coexistence rules between systems (e.g. networks or operators). These rules will be either imposed by the regulator or agreed among operators, and usually include the timeslots to be used in each frame for UL and DL transmissions, which is called the UL:DL pattern.

The usual approach for coexistence in TDD bands is to define a strict time synchronization scheme (in order to minimize cross interferences) that must be followed by all systems. This time synchronization scheme involves: unambiguously defining the start instants of all the transmission and reception opportunities (e.g. using Global Navigation Satellite Systems, GNSS, a transport network synchronization protocol as Precision Time Protocol or signals or synchronization protocols like IEEE 1588v2) and specifying the exact UL:DL (Uplink : Downlink) pattern detailing the transmission opportunities for Base Stations (BSs) and User Equipments (UEs) in all the systems which are deployed in a certain zone (e.g. a country).

Following a strict time synchronization has the drawback of restricting the freedom to allocate time resources according to the traffic needs in each system. All the systems must agree on the exact UL:DL pattern to use, or the Regulator may impose a common pattern to be adopted, with the subsequent loss in flexibility. Moreover, compliance with an agreed or imposed pattern forces devices to introduce a timing advance for UL transmissions in order to compensate propagation delays. These mechanisms can be easily adopted when all systems belong to the same baseband technology but are far more difficult to apply when coexistence between different technologies is sought. In addition, imposing strict UL/DL patterns can reduce the ability of the system to cope with varying types of traffic, e.g. from Voice over IP (where very small packets are preferred) to high-quality video traffic (where large packets are more dominant).

To circumvent the above drawbacks, some FWA systems in mmWaves operate in FDD mode, i.e. they use different frequencies in UL and DL (either from the same band or from different bands) with a given duplex gap separation in between. In such cases, no strict time synchronization is required, and systems only need to follow certain out-of-band emission limits to keep interferences to a minimum. However, leaving a duplex gap at these high frequencies significantly reduces spectrum efficiency, and some mmWaves bands (like 26 GHz) will only work in TDD mode for 5G New Radio (NR).

Other procedures rely on strict filtering characteristics and appropriate guard bands between coexisting systems while avoiding time synchronization. This approach is however unfeasible when the incumbent systems cannot be changed to apply the required filtering. This is the case of some mmWave systems, where the presence of so many antenna elements makes it very challenging to apply strict filters at the outputs of the power amplifiers, hence making impossible to fully avoid time synchronization.

Document ZTE: "Channel sensing based schemes for cross-link interference mitigation in NR", 3GPP DRAFT; R1-1712282, 3RD GENERATION PARTNERSHIP PROJECT (3GPP), vol. RAN WG1, 20 August 2017, discloses cross-link interference mitigation among different base stations. Document CATT: "Discussion on eNB synchronization error", 3GPP DRAFT; R4-132644, 3RD GENERATION PARTNERSHIP PROJECT (3GPP), vol. RAN WG4, 13 May 2013 discusses TDD synchronization.

In some proposals, as in CN101282168 and US20130028151, the new TDD system aimed to coexist with an incumbent TDD system adapts its transmission parameters in such a way that all UL and DL transmissions of the new system are contained within the opportunity intervals defined by the incumbent system. This scheme can be appropriately considered as following strict time synchronization, whose time pattern is in some proposals signaled to devices. Other procedures consider blank periods to avoid interferences as in US20100135272 or US20130301420 with the subsequent loss in efficiency.

Thus, current existing techniques are suboptimal. Smarter strategies for coexistence in TDD bands are therefore required in order to avoid the high complexity and/or reduced spectrum efficiency that result from applying strict time synchronization rules in multi-system scenarios.

### Summary of the invention

The present invention solves the aforementioned problems and overcomes previously explained state-of-the-art limitations by proposing a method and device to facilitate coexistence between a (first) TDD cellular system, comprising at least one Base Station (BS) and at least one user equipment (UE) and one or more other TDD systems (called from now on incumbent TDD systems) operating in the same TDD frequency band, in such a way that no modifications are required to the incumbent systems (i.e. the incumbent systems remain unchanged) while interferences between the users and base stations of the respective systems are minimized, as well as any self-interference occurring between sectors of the same system. Thanks to the proposed mechanism, it is ensured that the resulting interferences between systems are minimized to the extent possible, while keeping the radio characteristics and the downlink, DL, and uplink, UL, time intervals defined by said incumbent system for radio transmission and reception unchanged.

The invention proposes a hybrid synchronization scheme with strictly synchronized DL transmissions but asynchronous operation in UL. The synchronous DL timing is assumed to be imposed by the incumbent system(s) (DL pattern agreed between the systems or imposed by a regulator) hence avoiding some of the interference terms between coexisting systems. However, UL operation can observe potentially different timings hence achieving a flexible UL:DL pattern. This represents an advantage over traditional fully synchronized TDD networks, where UL:DL ratio is fixed and cannot adapt to traffic demands. Interferences between systems can be minimized, as well as self-interference between adjacent sectors, while not requiring any changes to the incumbent systems. That is, thanks to the proposed invention the resulting UL:DL ratio of the UL and DL transmissions duration in said TDD system is flexible and dynamically determined by the scheduler decisions at the base station of the first cellular system, whereas the UL:DL ratio of the UL and DL transmission duration in said incumbent system is fixed.

The radio scheduler at the base station of the first cellular system determines the UL transmission durations and start instants of the UL packets, in such a way that no collisions between the user equipments of the first and of the incumbent cellular systems will occur. DL transmissions, however, always stick to the predefined DL slots. Whenever an UL transmission from a given UE is active and occupies part of the DL resources, the BS will refrain from initiating any DL transmission until no UL signal intended for that BS is present.

Prior state-of-the-art techniques usually impose strict time synchronization, including a predefined UL:DL ratio and a Timing Advance procedure. The resulting loss in flexibility can also lead to high spectral inefficiencies as per the fixed size of the packets. Other asynchronous alternatives require guard bands and strict filtering capabilities, and incumbent systems may not be allowed to incorporate such modifications hence making this option unavailable. The proposed invention can overcome the limitations of prior techniques by introducing synchronous DL but asynchronous UL operation, hence allowing flexible UL packet sizes while not requiring any Timing Advance algorithm. UEs can therefore be simpler while achieving better spectral efficiency than in a fixed UL:DL configuration. Interferences towards incumbent base station, and from incumbent user equipment, are also avoided, in this proposal. The required filtering characteristics only apply to the system willing to coexist with other incumbents in the same band. Interference between nodes from the same system can also be minimized in the proposed invention, hence leading to simpler operational deployments where nodes need not synchronize their scheduler decisions but just the DL transmission occasions.

A method performed by a base station, a corresponding base station apparatus and a corresponding non-transitory computer readable medium are defined in appended claims 1, 14, 15 respectively. The invention is defined by the appended claims.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 depicts a diagram showing the interference terms between two TDD systems coexisting in the same frequency band, where the proposed solution may be applied according to an embodiment of the invention.
Figure 2 shows a schematic diagram of a full time synchronization scheme between base stations BS1 and BS2 according to prior art solutions.
Figure 3 shows a schematic diagram of a Timing Advance mechanism according to prior art solutions.
Figure 4 shows a schematic diagram of a full asynchronous operation scheme between base stations BS1 and BS2 according to prior art solutions.
Figure 5 shows a schematic diagram of an example of the proposed hybrid synchronization scheme between base station BS1 and user equipments UE1 and UE1A according to an embodiment of the invention.
Figure 6 shows a schematic representation of the frequency guard bands that should be reserved at the edges of the TDD system carriers to minimize interferences to/from the incumbent systems, according to an embodiment of the invention.
Figure 7 shows a schematic representation of the filter to minimize interferences from BS2 to BS1, according to an embodiment of the invention.
Figure 8 depicts a diagram showing the interference terms that appear when both base stations and both user equipments adopt the proposed hybrid synchronization scheme, according to an embodiment of the invention.

### Detailed description of the invention

The present invention proposes a method and device to minimize interferences between wireless cellular systems operating in TDD mode (using TDD techniques), where at least one of them is an incumbent system whose radiofrequency (RF) and software (SW) characteristics must not be modified. The proposed synchronization scheme (optionally together with additional filtering stages, guard bands and site engineering actions), can minimize interferences while at the same time achieving flexibility in UL:DL traffic ratio.

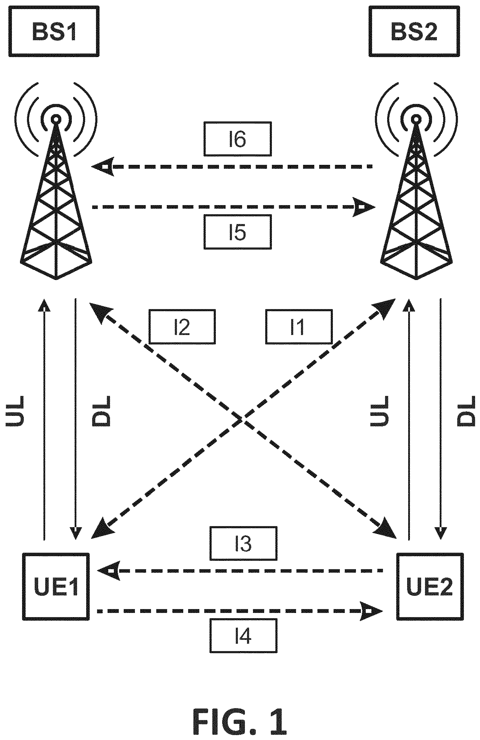

Figure 1 shows an embodiment for application of the proposed invention. A first (new) TDD system comprising at least one base station (BS1) and at least one user equipment (UE1) has to coexist in the same band with at least one second TDD system comprising at least BS2 and UE2, in such a way that BS2 and UE2 remain unchanged while minimizing interferences. That is, Figure 1 illustrates a cellular TDD scenario containing at least two Base Stations, named BS1 and BS2, and at least two User Equipment (UEs), named UE1 and UE2. Both BS1 and UE1 operates in a given carrier frequency that may be different or not to the one corresponding to BS2 and UE2, but in the same band. If BS2 and UE2 operate at a different carrier frequency, they are considered in what follows as the incumbent system, with which BS1 and UE1 must coexist. BS1 and UE1 can use the same baseband technology as BS2 and UE2, or a different one.

Figure 1 shows all possible interference terms in the uplink (UL) and downlink (DL) of this scenario, denoted as 11, 12, ..., 16. Some of these interference terms are avoided when strict time synchronization is observed. When BS1, BS2, UE1 and UE2 operate at the same carrier frequency, I1, I2, ..., I6 are usually denoted as self-interference terms. The interference terms are the following:
- Cross BS-to-UE and UE-to-BS interference terms I1 and I2. These interference terms are always present regardless of whether the systems are time-synchronized or not. If the carrier frequencies of both systems are different, the impact of I1 and I2 will be minimal if proper out of band and spurious emission requirements are fulfilled at both BS and UE. In such a case, its only effect will be a reduction in the effective signal to noise ratio (SNR) caused by the spectral leakage at the edges of the signal carriers. If both systems use the same frequency, then these interferences might be significant.
- UE-to-UE (13, 14) and BS-to-BS (15, 16) interference terms. These terms can be very significant if UEs or BSs are close to each other. In particular, I3 and I4 are the hardest to mitigate because UEs are typically uncoordinated and its relative positions cannot be controlled beforehand. These interference terms are especially high when the UL transmissions and DL transmissions are partially or totally overlapped, for example, when the uplink transmission of UE2 coincides with the downlink reception of UE1 (13), when the uplink transmission of UE1 coincides with the downlink reception of UE2 (14), when the downlink transmission of BS1 coincides with the uplink reception of BS2 (15) or when the downlink transmission of BS2 coincides with the uplink reception of BS1 (16).

In order to mitigate the above sources of interferences, different coexistence schemes are devised between BS1 and BS2. Two schemes are commonly adopted, full time synchronization and fully asynchronous operation:

### - Full time synchronization

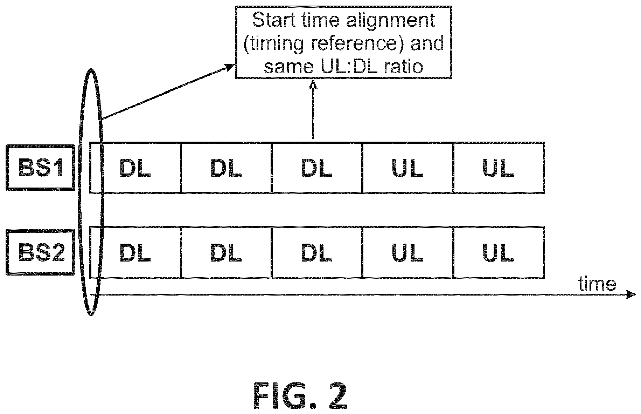

In this case, both systems are strictly time-synchronized as shown in Figure 2. The DL and UL slots are the same and synchronized (they start and finish at the same time instants). Interference terms I3, I4, I5 and I6 are not present in this case.

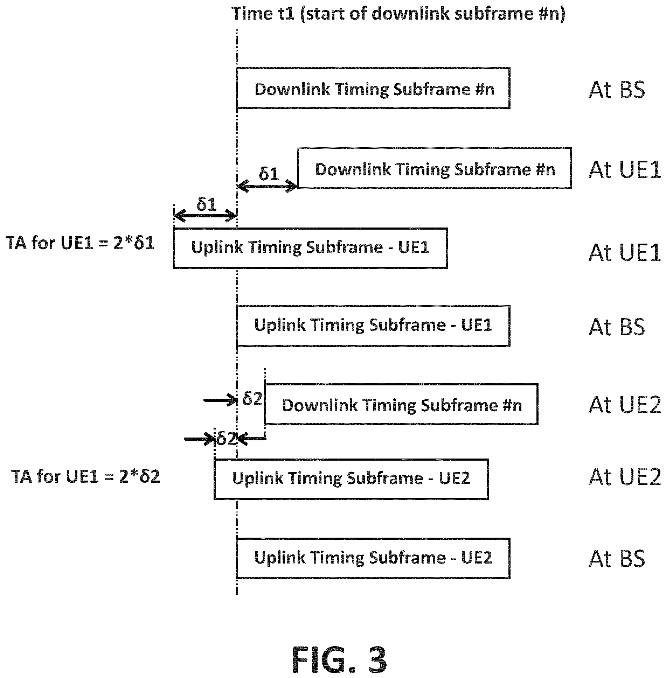

Full time synchronization implies that systems must ensure the following:
1. A common time reference that must be shared among the synchronized BS nodes, unambiguously defining the starts of frames, subframes, and slots at the BS side. It can be provided by e.g. Global Navigation Satellite Systems (GNSS) or Precision Time Protocol (PTP), as long as it ensures a given precision. As an example, a possible frame structure for 5G NR (New Radio) Technologies in mmWaves may have a subframe duration of 1 ms divided in 8 slots of 125 microseconds each one. With full time synchronization, the beginning of slots and subframes are exactly aligned at all the BSs operating in the same band, by means of a common time reference that must be shared by all the nodes.
2. A common UL:DL pattern that specifies the expected (reserved) occasions for DL transmission and UL reception at the BS side (and therefore, for DL reception and UL transmission in the UE side), as well as a guard period for DL-to-UL transition. A possible UL:DL pattern that could be adopted by mmWave 5G NR systems, referred to as DDDSU, with three DL slots (D), then one special (S) slot mainly intended for DL-UL switching and one UL slot (U). In this example each slot will have a duration of 125 microseconds. The special slot can also contain UL (U) symbols, DL (D) symbols and flexible (F) symbols (for example as defined in ETSI TS 138 213: "5G; NR; Physical layer procedures for control 3GPP TS 38.213 version 15.3.0 Release 15)", 2018. For example, the S slot can include n symbols (e.g. 14) which can be only D symbols, U only symbols or only F symbols or it can include a combination of them (that is some D symbols and some F symbols, some U symbols and some F symbols...). The exact structure of the S slot must also be agreed by all systems operating in the same mmWave band.
3. A Timing Advance (TA) value that all UEs must apply according to a common algorithm. TA adjustments are aimed to ensure that UL signals reach the BS at the same time instants, regardless of the UE positions in the cell. TA relies on a closed-loop process, where the BS estimates the time offset that each UE has to apply to the start of all subframes containing UL slots and properly notifies it to the UEs. TA is calculated by means of the following relation: *TA* = 2*δ* + *t_{processing}*
where *δ* is the propagation time between BS and UE, and *t_{processing}* is the estimated processing time at the UE. Figure 3 illustrates the principle of TA algorithm, between two UEs and a BS. The UEs will receive the downlink subframe with a delay corresponding to the propagation time from the BS to the UE (*δ*1 for UE1 and *δ*2 for UE2).Then, the UEs will apply the time offset estimated and reported by the BS and send their uplink subframes to the BS, which will be received at the same instants. In figure 3, it is considered that *t_{processing}* is very small compared to the propagation times so it is not taken into account. All UEs coexisting in the same TDD band must obey the same TA algorithm to ensure that their transmissions do not collide with the occasions intended for DL.

It is apparent that full time synchronization has different implications for BSs and UEs:
- BSs must strictly follow the transmission and reception instants defined by an a-priori UL:DL pattern, whether agreed or imposed by Regulation (e.g. technology standards) with clearly defined start instants. The time source can be obtained by means of a hardware signal provided by e.g. GNSS or PTP.
- UEs acquire synchronization from the received DL signals (e.g. from a special synchronization beacon devised for this) and adjust the start occasions of UL transmissions according to a given TA algorithm. Even if both systems coexisting in the band implement different baseband technologies, with full time synchronization the UEs will have to follow the same TA algorithm to ensure a given agreed UL:DL pattern.

### - Fully asynchronous operation

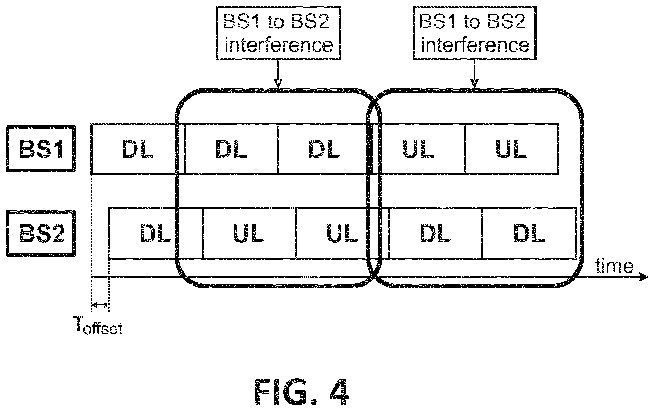

In this case systems operate in asynchronous mode (an example shown in Figure 4). There is no time alignment of transmissions between base stations, and different UL:DL patterns are generally observed by the coexisting systems (by the coexisting base stations). As it can be seen in figure 4, the slots starts and finish at different times in each BS and one of the BS can be transmitting in the downlink and the other in the Uplink. This leads to strong BS-to-BS and UE-to-UE interference terms, which can be alleviated by means of additional filters and guard bands. As it can be seen in figure 4, when BS1 is transmitting in the downlink and BS2 in the uplink there is a strong interference from BS1 to BS2 (and vice versa).

Fully asynchronous operation can be possible in cellular systems (especially in systems operating in the sub-6 GHz frequency range) provided that:
1. BSs and UEs of coexisting systems fulfil strict out of band and spurious emission limits defined by the baseband standards.
2. Operator-specific receive filters are included at the BS side to protect each system from the BS-to-BS interference created by the other systems.
3. Appropriate guard bands are reserved between the carrier frequencies of all coexisting systems to further reduce in-band interferences. The part of frequency spectrum used by said system should be separated by appropriated guard bands.

The actual filtering requirements, emission limits and guard bands must be calculated according to the baseband receiver characteristics. Fully asynchronous operation requires special filtering techniques at the transmission and reception stages of all coexisting systems; if any of them does not implement such filters, coexistence will not be possible because the interference would be too high. As an example, the presence of hundreds or even thousands of antenna elements in some mmWave systems generally makes it too challenging, or too costly, to include strict filters after the power amplifiers (PAs) and low-noise amplifiers (LNAs); in such cases, fully asynchronous operation is generally not possible unless extremely large guard bands are reserved to protect the two systems from each other. This can also happen if a new system has to coexist with an incumbent system in the same band and it is not possible to introduce extra filtering on the incumbent equipment.

In view of the above drawbacks of the existing schemes to mitigate interferences, the present patent application proposes an alternative hybrid synchronization mechanism that accomplishes coexistence between a first (new) system and at least one second (incumbent) system without requiring any modifications to the second system equipment.

### Proposed hybrid synchronization scheme

In a scenario where the proposed solution can be applied, it is assumed that a first TDD system, comprising at least one BS and one or multiple UEs, must coexist with one or more second TDD systems (called incumbent systems) operating in the same band. The incumbent systems must remain unchanged while ensuring that the resulting interferences between systems are minimized to the extent possible.

In this scenario, the TDD system can be part of any telecommunications network, especially a cellular telecommunication network, for example a 2G, 3G, 4G, 5G mobile telecommunications network or any other type of telecommunications network using TDD technology for communications. The technologies used by the TDD system and the incumbent system are the same or different (in an embodiment, for example, the first system can be a 3GPP or non-3GPP system operating in a mmWave band, and said incumbent TDD system is a 3GPP system operating in the same band).

The user equipment may be a mobile telephone, a tablet, a smartphone, a laptop, a computer, a PC... (and generally any electronic equipment or device that can be connected to the TDD system).

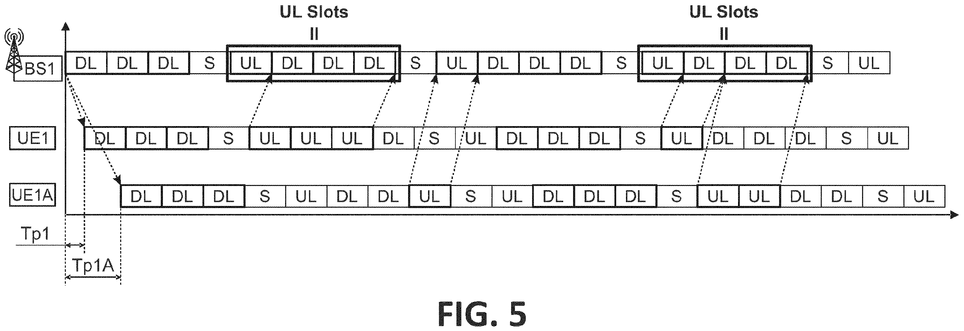

The proposal considers strictly synchronized DL transmissions but asynchronous operation in UL, as shown in Figure 5. Figure 5 shows a TDD system, with at least one Base Station BS1 and at least two user equipments UE1 and UE1A. In said figure, Tp1 and Tp1A are the propagation times between BS1 and UE1 and UE1A respectively. In figure 5, the slots where there is a real DL or UL transmission are highlighted. The synchronous DL instants and pattern is imposed by the incumbent systems (previously agreed between the existing TDD systems in a certain area), in order to avoid some of the interference terms in Figure 1. However, UL operation can observe potentially different timings hence achieving a flexible UL:DL pattern.

The BS scheduler determines the UL transmission durations and start instants of the UL packets, in such a way that no collisions between UEs occur. Usually, the UEs transmit to the BS their traffic requirements and, based at least on said information the BS scheduler assigns to each UE, UL transmission durations and start instants of their UL packets (which may stick or not to the predefined UL slots, that is the UL packets can be transmitted in the predefined UL slots or in predefined DL or S time slots, for example). DL transmissions, however, always stick to the predefined DL slots. That is, to the DL time slots predefined by the UL:DL pattern agreed between all the existing TDD systems in a certain geographical area.

Whenever an UL transmission from a given UE is active and occupies part of the DL resources, the BS will refrain from initiating any DL transmission until no UL signal intended for said BS is present in the system. That is, as the BS has assigned UL transmission durations and start instants to each UE (some of them occupying part of the pre-assigned DL resources), the BS knows when there is no UL transmission assigned and will only initiate a DL transmission when there is no UL transmission assigned in said time slot. No Timing Advance mechanism is necessary, as UL transmissions do not need to be confined within the limits of the UL occasions defined by the incumbent systems. That is, if the system does not use the hybrid synchronization scheme (e.g. incumbent system) it should perform a Timing Advance algorithm to ensure that all UL signals under control of BS2 are received at the same instants, while no Timing Advance algorithm is needed at said TDD system applying the proposed hybrid synchronization scheme, to achieve coexistence and minimize interferences.

In order for the BS to keep control of the active UL transmissions from UEs, estimation of the round-trip-time may be needed to avoid any overlap between the active UL transmissions and any DL occasion planned by the BS scheduler. That is, each base station (BS1) estimates the round-trip-time between it and the user equipment connected to that cell, with the intention to avoid any time overlap between received UL signals and transmitted DL signals when radio resources are to be scheduled by the base station. Such estimation can be performed dynamically by the BS (for moving UEs), or statically by the BS or the management system (for static UEs, like in FWA scenarios), without precluding any other possibility.

The actual UL:DL ratio in the system will therefore be dynamic and dependent on the BS scheduler decisions, which are ultimately determined by the traffic demand and the spectral efficiency of the system. This represents an advantage over traditional fully synchronized TDD networks, where UL:DL ratio is fixed and cannot adapt to the traffic demand.

The presence of asynchronous UL transmissions generally introduces interferences between the elements of the system. However with the proposed hybrid synchronization scheme said interference is minimized. For example, if the proposed hybrid synchronization scheme is applied at BS1 and UE1 (the first TDD system), the interference from BS2 to BS1 (15 in figure 1) and from UE2 to UE1 (13 in figure 1) will be avoided (because the uplink transmission of UE2 will never coincide with the downlink transmission of UE1 and BS1 will strictly follow same DL time instants as used in BS2), being BS2 and UE2 a base station and user equipment of a second TDD system (an incumbent system coexisting in the same band, where this hybrid synchronization scheme may not be applied).

The base stations BS1 and BS2 may be in different positions or even they can be co-located in the same position (in this latter case, the base stations may be pointing towards non-overlapping angular regions, hence serving different cellular sectors).

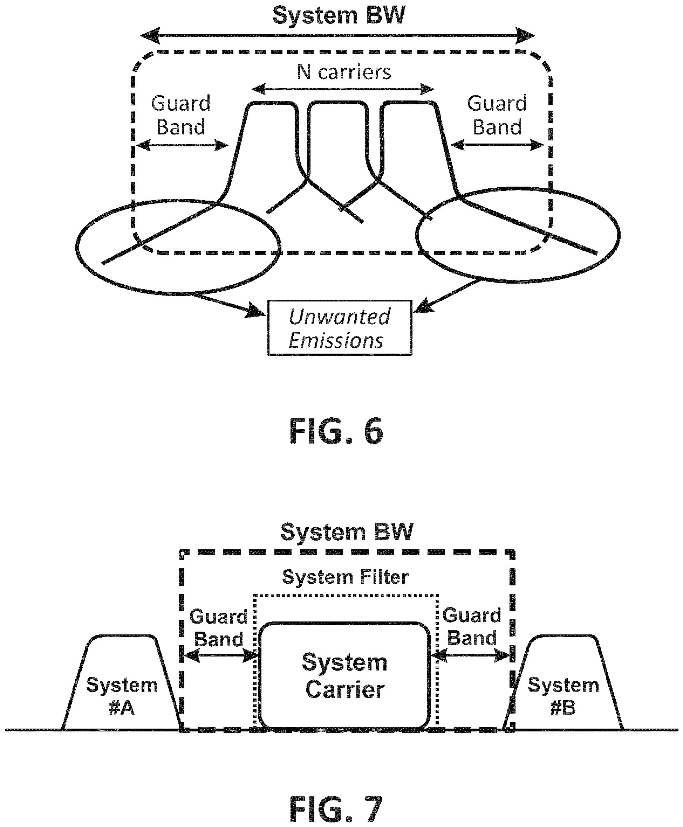

In a preferred embodiment, the following rules are observed in order to minimize interferences between the system with hybrid synchronization and the incumbent system (where this hybrid synchronization scheme may not be applied):
1. Whenever BS1 needs to start any DL transmission, it sticks to the predefined DL time intervals, i.e. those defined by the incumbent system (that is, the time interval between the start and end of all DL packets transmitted by the base station of said TDD system, BS1, must be contained within the time intervals established for DL transmission in said incumbent system) and avoids any of the UL time intervals. This will avoid interference I5 from BS1 to BS2 and interference I3 from UE2 to UE1 during the DL transmissions of said TDD system.
2. UE1, upon receiving appropriate scheduling indications from BS1, can transmit during the UL slots defined by the incumbent system, but can also "invade" part of the slots reserved for DL in the incumbent system, (if no other DL transmission is active in the cell), if the BS scheduler has allowed it to do it. That is, UE1 can transmit during the time intervals established for UL transmission in said incumbent system, and can also transmit during part, or all, of the time intervals established for DL transmission in said incumbent system, provided that no other DL transmission is active as per the appropriate scheduling indications from BS1. This enables a flexible UL:DL pattern whose actual ratio is controlled by the BS scheduler as a response to the traffic demand (however, the UL:DL ratio in the incumbent system is fixed if not applying the hybrid synchronization scheme). In such a case:
   a) Interference I4 from UE1 to UE2 (which appears specially when UE1 is transmitting, uplink, and UE2 is receiving a downlink transmission) may be minimized by ensuring that (see figure 6): guard bands are reserved preferably at both edges of the carrier corresponding to UE1, and UE1 fulfils the out of band and spurious emission limits required to ensure that, considering the reserved guard bands, the resulting in-band interference at UE2 remains below thermal noise. That is, the guard bands introduce an appropriate roll-off for the transmit filter response of UE1 in order to ensure that the unwanted signals received by UE2 are below thermal noise.
   b) Interference 16 from BS2 to BS1 (which appears specially when BS2 is transmitting, downlink, and BS1 is receiving an uplink transmission) may be minimized by additionally ensuring that: BS1 has specific receive filters centred at the carrier frequency to ensure that the unwanted signal levels at BS1 receiver are below thermal noise (see figure 7), and optionally also by site engineering actions are taken to minimize the RF coupling between BS2 and BS1, e.g. maximize the frequency separation between BS1 and BS2 signal carriers, maximize the physical distance between BSs, and avoid direct visibility between BSs by optimizing their tilts and azimuth orientations, among others. These actions will help keep the resulting in-band interference at BS1 below thermal noise.

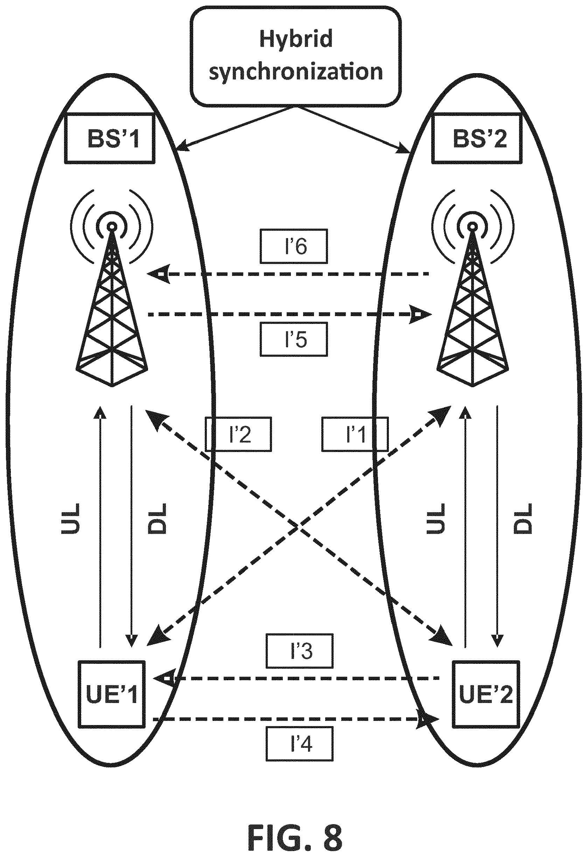

Interference can also appear between base stations of the same system in the proposed synchronization scheme. Figure 8 shows an embodiment where the proposed hybrid synchronization is applied at BS'1, BS'2, UE'1 and UE'2, all of which belong to the same TDD cellular system. In addition to observing the rules already described (for minimizing the interference between the TDD system applying the proposed synchronization scheme and an incumbent system not applying said proposed synchronization scheme), the following rules may be applied:
1. The cross BS-to-UE interference terms I'1 and I'2 can be minimized if base stations are assigned different carrier frequencies (as it happens in the previous scenario, where the BS1 and BS2 belong to different TDD systems). Proper out-of-band and spurious emission limits can be defined to ensure that the resulting unwanted signal levels at both BS and UE receivers are below thermal noise.
2. Interferences I'5, I'6 between different base stations can be minimized by additionally optimizing the corresponding tilts and azimuth orientations to avoid direct visibility between BSs. Such spatial isolation can ensure that the resulting unwanted signal levels at the receiver side are below thermal noise, by exploiting the signal loss occurring outside the direction of maximum radiation in the transmit and receive antenna patterns.
3. Interferences I'3, I'4 between UEs can also be minimized by additionally ensuring that: guard bands are reserved at both edges of the signal carriers, and UEs fulfil the necessary out-of-band and spurious emission limits to ensure that, considering the reserved guard bands, the unwanted signal levels at the receiver side remain below thermal noise.

The proposed embodiments can be implemented by means of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

The matters defined in this detailed description are provided to assist in a comprehensive understanding of the invention. Accordingly, those of ordinary skill in the art will recognize that variation changes and modifications of the embodiments described herein can be made without departing from the scope of the invention. Also, description of well-known functions and elements are omitted for clarity and conciseness. Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention. The invention is defined by the appended claims.

## Claims

1. A method for minimizing interferences between a first Time-Division Duplex, TDD, communications system and at least a second TDD communications system that coexists in the same band with the first TDD communications system, wherein each TDD system comprises at least one base station, a first base station, BS1, in the first TDD communications system and a second base station, BS2,in the second TDD communications system respectively, in charge of scheduling downlink, DL, and uplink, UL, transmissions and at least one user equipment, wherein the DL and UL transmissions scheduling in the second TDD system is made according to a pre-established fixed UL:DL pattern which indicates which time intervals are reserved for DL transmission and which for UL reception in the second base station, BS2, side, wherein the method comprises the following steps performed by BS1:
a) scheduling a time interval for transmission of DL packets from BS1 only if said time interval is contained within the time intervals reserved for DL transmission in said second TDD system and said time interval does not overlap with any UL time interval scheduled by BS1 for UL reception;
b) scheduling one or more time intervals for transmission of UL packets by a user equipment, wherein said one or more time intervals are at least partially outside the time intervals reserved for UL transmission in said second TDD system.

2. A method according to claim 1, where step b) comprises: BS1 scheduling one or more time intervals for transmission of UL packets which at least partially overlap one or more time intervals reserved for DL reception in said second TDD system.

3. A method according to any of the previous claims, where BS1 schedules a time interval for transmission of UL packets by a user equipment only if said time interval does not overlap with any DL time interval scheduled by BS1 for DL transmission to any other user equipment served by BS1.

4. A method according to any of the previous claims, where the second TDD system follows a strict time synchronization scheme by using a Global Navigation Satellite System, GNSS, or a transport network synchronization protocol, such as Precision Time Protocol, PTP, or any other suitable means for time synchronization.

5. A method according to any of the previous claims, where guard bands are reserved at both edges of the frequency carriers assigned to the at least one base station and the at least one user equipment of the first TDD system.

6. A method according to any of the previous claims, where BS1 schedules the UL time intervals based at least on the transmission traffic requirements of the user equipments served by it and/or on the transmission traffic requirements of the BS1.

7. A method according to any of the previous claims, where BS1 has specific reception filters centered at its carrier frequency.

8. A method according to any of the previous claims, where in order to further minimize the interference between BS2 and BS1, at least one of the following actions are also taken: maximize the separation of the carrier frequencies used by BS2 and BS1, maximize the physical distance between BS1 and BS2, or avoid direct visibility between both base stations by adjusting their relative tilts and azimuth orientations.

9. A method according to any of the previous claims, where the first TDD system further comprises a second Base Station BS'2, where said second base station also performs steps a) and b) for scheduling the transmission of UL and DL packets.

10. A method according to claim 9, where in order to further minimize the interference between BS1 and BS'2, at least one of the following actions are also taken: assign different carrier frequencies to BS1 and BS'2, avoid direct visibility between both base stations by adjusting their relative tilts and azimuth orientations, or reserve guard bands at both edges of the carrier frequencies of BS1 and BS'2.

11. A method according to any of previous claims 9 or 10, where the base stations BS1 and BS'2 of said first TDD system estimate the round-trip-time between them and the user equipments connected to the respective base station, and said estimated round-trip-time is taken into account when scheduling UL and/or DL transmissions.

12. A method according to any of the previous claims, where in order to further minimize the interferences created by a User Equipment UE1 connected to BS1, UE1 fulfils out-of-band and spurious emission limits requirements.

13. A method according to any of the previous claims, where any of the base stations of the first and second TDD systems are located in different positions or co-located in the same position and, in this second case, the co-located base stations are pointing towards non-overlapping angular regions.

14. A first base station, BS1, of a first Time-Division Duplex, TDD, communications system, for minimizing interferences with at least a second TDD system comprising at least one second base station, BS2, wherein the second TDD system coexists in the same band with the first TDD communications system, wherein the DL and UL transmissions scheduling in the second TDD system is made following a pre-established fixed UL:DL pattern which indicates which time intervals of each frame are reserved for DL transmission and which for UL reception in the second base station, BS2, side, wherein BS1 comprises a base station scheduler in charge of scheduling DL and UL transmissions, the base station scheduler being configured to:
a) schedule a time interval for transmission of DL packets from BS1 only if said time interval is contained within the time intervals reserved for DL transmission in the pre-established fixed UL:DL pattern of said second TDD system and said time interval does not overlap with any UL time interval scheduled by BS1 for UL reception;
b) schedule one or more time intervals for transmission of UL packets by a user equipment, wherein said one or more time intervals are at least partially outside the time intervals reserved for UL transmissions in the pre-established fixed UL:DL pattern of said second TDD system.

15. A non-transitory computer readable medium comprising instructions which, when executed by a computer, cause the computer to carry out the method according to any of the claims 1-13.

## Patentansprüche

1. Verfahren zum Minimieren von Interdifferenzen zwischen einem ersten Zeitmultiplexduplex-, TDD, Kommunikationssystem und mindestens einem zweiten TDD-Kommunikationssystem, das in demselben Band wie das erste TDD-Kommunikationssystem existiert, wobei jedes TDD-Kommunikationssystem mindestens eine Basisstation aufweist, jeweils eine erste Basisstation BS1 in dem ersten TDD-Kommunikationssystem und einer zweiten Basisstation BS2 in dem zweiten TDD-System, die für die Planung von Abwärts-DL- und Aufwärts-UL-Verbindungen zuständig sind und mindestens einen Benutzergerät, wobei die DL- und UL-Verbindungen in dem zweiten TDD-System gemäß einem voraus festgelegten festen UL:DL Muster erfolgen, dass angibt, welche Zeitintervalle für die DL-Übertragung und welche für den UL-Empfang auf der Seite der zweiten Basisstation BS2 reserviert sind, wobei das Verfahren die folgenden Schritte, durchgeführt von BS1 aufweist:
a) Einplanen für ein Zeitintervall für die Übertragung von DL-Paketen von BS1 nur dann, wenn das Zeitintervall innerhalb der für die DL-Übertragung in dem zweiten TDD-System reservierten Zeitintervalle enthalten ist und das Zeitintervall sich nicht mit irgendeinem von der Basisstation für den UL-Empfang eingeplanten UL-Zeitintervall überschneidet;
b) Einplanen eines oder mehrere Zeitintervalle für die Übertragung von UL-Pakten durch ein Benutzergerät, wobei das eine oder die mehreren Zeitintervalle zumindest teilweise außerhalb der für die UL-Übertragung im zweiten TDD-System-basierten Zeitintervall liegen.

2. Verfahren nach Anspruch 1, wobei Schritt b) aufweist: BS1 plant ein oder mehrere Zeitintervalle für die Übertragung von UL-Paketen ein, die zumindest teilweise ein oder mehrere Zeitintervalle überlappen, die für den DL-Empfang in dem zweiten TDD-System reserviert sind.

3. Verfahren nach einem der vorangehenden Ansprüche, wobei BS1 ein Zeitintervall für die Übertragung von UL-Paketen durch ein Benutzergerät nur dann einplant, wenn sich das Zeitintervall nicht mit einem DL-Zeitintervall überschneidet, das von BS1 für die DL-Übertragung an ein anderes von BS1 bedientes Benutzergerät eingeplant ist.

4. Verfahren nach einem der vorangehenden Ansprüche, wobei das zweite TDD-System einem strengen Zeitsynchronisationsschema folgt, indem es ein globales Navigationssatellitensystem, GNSS oder ein Transportnetzsynchronisationsprotokoll wie zum Beispiel Precision-time-Protokoll, PTP oder ein anderes geeignetes Mittel zur Zeitsynchronisation verwendet.

5. Verfahren nach einem der vorangehenden Ansprüche, bei dem Schutzbänder an beiden Rändern der Frequenzträger reserviert sind, die mindestens einer Basisstation und mindestens einem Benutzergerät des ersten TDD-Systems zugewiesen sind.

6. Verfahren nach einem der vorangehenden Ansprüche, wobei jede BS1 die UL Zeitintervalle zumindest auf der Grundlage der Anforderungen des Übertragungsverkehrs der von ihr bedienten Benutzereinrichtungen und/oder der Anforderungen des Übertragungsverkehrs der BS1 plant.

7. Verfahren nach einem der vorangehenden Ansprüche, wobei die BS1 über spezifische, auf ihre Trägerfrequenz zentrierte Empfangsfelder verfügt.

8. Verfahren nach einem der vorangehenden Ansprüche, wobei zur weiteren Minimierung der Interferenz zwischen BS2 und BS1 mindestens eine der folgenden Maßnahmen ebenfalls ergriffen wird: Maximieren der Trennung der von BS2 und BS1 verwendeten Trägerfrequenzen, Maximierung des physikalischen Abstandes zwischen BS1 und BS2 oder Vermeidung direkter Sichtbarkeit zwischen beiden Basisstationen durch Anpassung ihrer relativen Neigung und Azimuthausrichtung.

9. Verfahren nach einem der vorangehenden Ansprüche, wobei das erste TDD-System des Weiteren aufweist: eine zweite Basisstation BS'2, wobei die zweite Basisstation auch die Schritte a) und b) zum Planen der Übertragung von UL und DL-Pakten durchführt.

10. Verfahren nach Anspruch 9, wobei zur weiteren Minimierung der Interferenz zwischen BS1 und BS'2 mindestens eine der folgenden Maßnahmen ebenfalls ausgeführt wird: Zuweisen unterschiedlicher Trägerfrequenzen an BS1 und BS'2, Vermeiden direkter Sichtbarkeit zwischen beiden Basisstationen durch Anpassen ihrer relativen Neigung und Azimuthausrichtung oder Reservieren von Schutzbändern an beiden Rändern der Trägerfrequenzen von BS1 und BS'2.

11. Verfahren nach einem der vorangehenden Ansprüche 9 oder 10, wobei die Basisstationen BS1 und BS'2 des ersten TDD-Systems die Umlaufzeit zwischen ihnen und den mit der jeweiligen Basisstation verbundenen Benutzergeräten schätzen und die geschätzte Umlaufzeit bei der Planung von UL- und/oder DL-Übertragung berücksichtigt wird.

12. Verfahren nach einem der vorangehenden Ansprüche, wobei zur weiteren Minimierung der von einem an BS1 angeschlossenen Benutzergerät UE1 erzeugten Störung das UE1 die Anforderung an die Grenzwerte der außer-Band und Störaussendungen erfüllt.

13. Verfahren nach einem der vorangehenden Ansprüche, wobei bei jeder der Basisstationen des ersten und zweiten TDD-Systems sich an unterschiedlichen Positionen befinden oder an derselben Position zusammen aufgestellt sind und in diesem zweiten Fall die zusammen aufgestellten Basisstationen auf nicht überlappende Winkelbereiche gerichtet sind.

14. Erste Basisstation BS1 eines ersten Time-Division-Duplex, TDD, Kommunikationssystem zum Minimieren von Interferenzen mit mindestens einem zweiten TDD-System aufweisend mindestens eine zweite Basisstation BS2, wobei das zweite TDD-System in demselben Band wie das erste TDD-Kommunikationssystem existiert, wobei die DL- und UL-Übertragungsplanung in dem zweiten TDD-System ausgeführt wird, folgend einem zuvor festgelegten UL:DL-Musters, das angibt, welche Zeitintervalle jedes Rahmens für die DL-Übertragung und welche für den UL-Empfang auf der Seite der zweiten Basisstation BS2 reserviert sind, wobei BS1 einen Basisstationsplaner aufweist, der für die Planung der DL- und UL-Übertragungen zuständig ist, wobei der Basisstationsplaner konfiguriert ist um:
a) ein Zeitintervall für die Übertragung von DL-Paketen von BS1 nur dann zu planen, wenn das Zeitintervall innerhalb der Zeitintervalle enthalten ist, die für die DL-Übertragung in dem vorher eingerichteten festen UL:DL-Muster des zweiten TDD-Systems reserviert sind und das Zeitintervall sich nicht mit irgendeinem UL Zeitintervall überschneidet, das von BS1 für den UL-Empfang geplant ist;
b) Planen eines oder mehrerer Zeitintervalle für die Übertragung von UL-Paketen durch ein Benutzergerät, wobei das eine oder die mehreren Zeitinervalle zumindest teilweise außerhalb der Zeitintervalle liegen, die für UL-Übertragungen in dem vorher eingerichteten festen UL:DL-Muster des zweiten TDD-Systems reserviert sind.

15. Nicht-flüchtiges computerlesbares Medium aufweisend Anweisungen, welche, wenn sie durch einen Computer ausgeführt werden, den Computer veranlassen, das Verfahren nach einem der Ansprüche 1 bis 13 durchzuführen.

## Revendications

1. Procédé pour minimiser les interférences entre un premier système de communication duplex à répartition temporelle, TDD, et au moins un second système de communication TDD qui coexiste dans la même bande que le premier système de communication TDD, dans lequel chaque système TDD comprend au moins une station de base, une première station de base, BS1, dans le premier système de communications TDD et une deuxième station de base, BS2, dans le deuxième système de communications TDD respectivement, en charge de la programmation des transmissions de liaison descendante, DL, et de liaison montante, UL, et au moins un équipement d'utilisateur, dans lequel la programmation des transmissions DL et UL dans le deuxième système TDD est faite selon un modèle UL:DL qui indique quels intervalles de temps sont réservés à la transmission DL et lesquels à la réception UL du côté de la seconde station de base, BS2, dans lequel le procédé comprend les étapes suivantes réalisées par BS1 :
a) la programmation d'un intervalle de temps pour la transmission de paquets DL à partir de BS1 uniquement si ledit intervalle de temps est contenu dans les intervalles de temps réservés à la transmission DL dans ledit second système TDD et si ledit intervalle de temps ne chevauche aucun intervalle de temps UL programmé par BS1 pour la réception UL ;
b) la programmation d'un ou plusieurs intervalles de temps pour la transmission de paquets UL par un équipement utilisateur, dans lequel lesdits un ou plusieurs intervalles de temps sont au moins partiellement en dehors des intervalles de temps réservés à la transmission UL dans ledit second système TDD.

2. Procédé selon la revendication 1, dans lequel l'étape b) comprend: la programmation par BS1 d'un ou plusieurs intervalles de temps pour la transmission de paquets UL qui chevauchent au moins partiellement un ou plusieurs intervalles de temps réservés à la réception DL dans ledit second système TDD.

3. Procédé selon l'une quelconque des revendications précédentes, dans lequel BS1 programme un intervalle de temps pour la transmission de paquets UL par un équipement d'utilisateur uniquement si ledit intervalle de temps ne chevauche aucun intervalle de temps DL programmé par BS1 pour la transmission DL à tout autre équipement utilisateur desservi par BS1.

4. Procédé selon l'une quelconque des revendications précédentes, dans lequel le second système TDD suit un schéma de synchronisation temporelle strict en utilisant une Géolocalisation et Navigation par un Système de Satellites, GNSS, ou un protocole de synchronisation de réseau de transport, tel que le protocole de temps de précision, PTP, ou tout autre moyen approprié pour la synchronisation temporelle.

5. Procédé selon l'une quelconque des revendications précédentes, dans lequel des bandes de garde sont réservées aux deux bords des porteuses de fréquences attribuées à l'au moins une station de base et à l'au moins un équipement d'utilisateur du premier système TDD.

6. Procédé selon l'une quelconque des revendications précédentes, dans lequel BS1 programme les intervalles de temps UL en se basant au moins sur les exigences de trafic de transmission des équipements d'utilisateur qu'elle dessert et/ou sur les exigences de trafic de transmission de BS1.

7. Procédé selon l'une quelconque des revendications précédentes, où BS1 comporte des filtres de réception spécifiques centrés sur sa fréquence porteuse.

8. Procédé selon l'une quelconque des revendications précédentes, dans lequel, afin de minimiser davantage l'interférence entre BS2 et BS1, au moins l'une des actions suivantes est également prise : maximiser la séparation des fréquences porteuses utilisées par BS2 et BS1, maximiser la distance physique entre BS1 et BS2, ou éviter la visibilité directe entre les deux stations de base en ajustant leurs inclinaisons et orientations azimutales relatives.

9. Procédé selon l'une quelconque des revendications précédentes, où le premier système TDD comprend en outre une deuxième station de base BS'2, où ladite deuxième station de base réalise également les étapes a) et b) pour programmer la transmission de paquets UL et DL.

10. Procédé selon la revendication 9, dans lequel, afin de minimiser davantage l'interférence entre BS1 et BS'2, au moins l'une des actions suivantes est également prise : attribuer des fréquences porteuses différentes à BS1 et BS'2, éviter la visibilité directe entre les deux stations de base en ajustant leurs inclinaisons et orientations azimutales relatives, ou réserver des bandes de garde aux deux bords des fréquences porteuses de BS1 et BS'2.

11. Procédé selon l'une quelconque des revendications précédentes 9 ou 10, dans lequel les stations de base BS1 et BS'2 dudit premier système TDD estiment le temps de trajet aller-retour entre elles et les équipements d'utilisateur connectés à la station de base respective, et ledit temps de trajet aller-retour estimé est pris en compte lors de la programmation des transmissions UL et/ou DL.

12. Procédé selon l'une quelconque des revendications précédentes, dans lequel, afin de minimiser davantage les interférences créées par un équipement d'utilisateur UE1 connecté à BS1, UE1 remplit les exigences de limites d'émissions hors bande et d'émissions parasites.

13. Procédé selon l'une quelconque des revendications précédentes, dans lequel l'une quelconque des stations de base des premier et deuxième systèmes TDD est située dans des positions différentes ou colocalisée dans la même position et, dans ce deuxième cas, les stations de base colocalisées sont dirigées vers des régions angulaires qui ne se chevauchent pas.

14. Une première station de base, BS1, d'un premier système de communication duplex à répartition temporelle, TDD, pour minimiser les interférences avec au moins un second système TDD comprenant au moins une seconde station de base, BS2, dans laquelle le second système TDD coexiste dans la même bande que le premier système de communication TDD, dans laquelle la programmation des transmissions DL et UL dans le second système TDD est effectué en suivant un motif fixe UL:DL préétabli qui indique quels intervalles de temps de chaque trame sont réservés à l'émission DL et lesquels à la réception UL du côté de la seconde station de base, BS2, dans lequel BS1 comprend un ordonnanceur de station de base en charge de la programmation des transmissions DL et UL, l'ordonnanceur de station de base étant configuré pour :
a) programmer un intervalle de temps pour la transmission de paquets DL à partir de BS1 uniquement si ledit intervalle de temps est contenu dans les intervalles de temps réservés à la transmission DL dans le motif fixe UL:DL préétabli dudit second système TDD et si ledit intervalle de temps ne chevauche aucun intervalle de temps UL programmé par BS1 pour la réception UL ;
b) programmer un ou plusieurs intervalles de temps pour la transmission de paquets UL par un équipement d'utilisateur, dans lequel lesdits un ou plusieurs intervalles de temps sont au moins partiellement en dehors des intervalles de temps réservés aux transmissions UL dans le motif fixe UL:DL préétabli dudit second système TDD.

15. Support lisible par ordinateur non transitoire comprenant des instructions qui, lorsqu'elles sont exécutées par un ordinateur, amènent l'ordinateur à mettre en oeuvre le procédé selon l'une quelconque des revendications 1 à 13.
